# EUROPÄISCHE PATENTANMELDUNG

(11) **EP 1 048 370 A2**
(43) Veröffentlichungstag der Anmeldung: **02.11.2000**
(21) Anmeldenummer: 00108491.2
(22) Anmeldetag: 19.04.2000
(51) Int. Cl.: B21B 38/02

(54) **Messrolle zum Feststellen von Planheitsabweichungen**

(30) Priorität: 26.04.1999 DE 19918699
(71) Anmelder: BFI VDEh- Institut für angewandte Forschung GmbH, 40237 Düsseldorf (DE)
(72) Erfinder: Mücke, Gert, 40724 Hilden (DE); Neuschütz, Eberhard, 40880 Ratingen (DE)
(74) Vertreter: König, Reimar, Dr.-Ing.

(57) **Zusammenfassung**

Eine Meßrolle zum Feststellen von Planheitsabweichungen beim Walzen von Metallband mißt beispielsweise die Spannungsverteilung mit Hilfe von Kraftmeßgebern über die Breite des Bandes, die in Ausnehmungen der Meßrolle mit Abstand zur Wandung der Ausnehmung angeordnet und somit von einem Ringspalt umgeben sind. Der Ringspalt ist nach außen hin verschlossen und an achsparallele Kanäle zum Zu- und Abführen eines Kühlmittels angeschlossen.

## Beschreibung

Die Erfindung bezieht sich auf eine Meßrolle zum Feststellen von Planheitsabweichungen beim Walzen, insbesondere Warmwalzen von Metallband.

Für das herkömmliche Messen der Planheit von Warmband werden im wesentlichen Verfahren eingesetzt, welche die Faserlängen des Bandes aus dem lokalen Abstand der Bandoberfläche zu einem festen Bezugsniveau (z.B. der Höhe des Bandes über dem Rollgang) mit laseroptischen Sensoren auf der Grundlage einer Triangulation bestimmen.

Die Anwendung dieser Verfahren ist nur während der Zeit möglich, während derer der Bandanfang zugfrei den Auslaufrollgang der Walzstraße bis zum Haspel durchläuft. Für diesen Zeitraum können sich die Längsunterschiede der Bandfasern in vertikaler Richtung als Vorwölbungen ausbilden und gemessen werden, um mit Hilfe der Meßwerte die Stellglieder der Walzgerüste zur Beeinflussung der Bandplanheit zu betätigen. Nachdem der Haspelzug wirksam geworden ist, wird von der automatischen Profilregelung beispielsweise die Arbeitswalzenbiegung in Abhängigkeit von der gemessenen Walzkraft mit dem Ziel verändert, die am Bandanfang erzielte Planheit über die gesamte Bandlänge zu erhalten.

Mit der Entwicklung neuer Gießtechnologien wie des endabmessungsnahen Gießens, beispielsweise der CSP-Technologie und neuer Anlagenkonzepte, ist es möglich, eine Bandendicke deutlich unter 2 mm zu erreichen. Für diese Bandendicke ist die oben beschriebene Planheitsregelung aufgrund von Planheitsabweichungen nur am Bandanfang nicht mehr ausreichend. Es ist eine Planheitsmessung über die gesamte Bandlänge, also unter Zugspannung erforderlich. Dies ist durch Messen der Spannungsverteilung über die Bandbreite möglich.

Dazu wird das Band, beispielsweise Stahlband, mit einem gewissen Umschlingungswinkel über eine Meßrolle geführt. Auf diese Weise kommt es bei einer in der deutschen Offenlegungsschrift 42 36 657 beschriebenen Meßrolle zu einer Berührung zwischen Kraftmeßgebern oder deren Abdeckungen, die in zur Rollenoberfläche offenen Ausnehmungen der Meßrolle angeordnet sind, und dem Band. Zwischen den am Boden ihrer Ausnehmungen aufgespannten Kraftmeßgebern und der sie umgebenden Ausnehmungswandung befindet sich ein zylindrischer Spalt. Dieser Spalt kann mit einem O-Ring oder mit einer Kunststoffschicht nach außen hin verschlossen sein, um das Eindringen von Schmutz, beispielsweise Bandabrieb zu verhindern.

Die Anordnung der Kraftmeßgeber mit Abstand von der sie umgebenden Wandung und das Verschließen des Ringspalts mit Hilfe eines O-Rings oder, wie in der deutschen Offenlegungsschrift 42 36 657 beschrieben, mittels eines hinreichend elastischen Kunststoffs verhindert, daß sich während des Walzens im Korpus der Rolle wirksame Kräfte störend auf die Kraftmeßgeber auswirken. Derartige Störkräfte sind die Folge des auf die Meßrolle wirkenden Bandzugs und einer damit verbundenen Durchbiegung der Rolle. Deren Querschnitt nimmt dabei die Form einer Ellipse an, deren längere Achse parallel zum Band verläuft. Die Rollendurchbiegung täuscht dem Kraftmeßgeber eine Unebenheit des Bandes vor, wenn sie durch Kraftnebenschluß auf den Meßgeber übertragen wird.

Die bekannten Meßrollen weisen - unabhängig von der Art und der Anordnung der Meßgeber in den Rollenbohrungen - den Nachteil auf, daß sie wegen der Temperaturempfindlichkeit der Meßgeber, insbesondere Kraftmeßgeber, ein Warmwalzen nicht erlauben. Derartige Meßrollen eignen sich normalerweise nicht für ein Walzen bei Bandtemperaturen über 180°C. Dies gilt auch für ummantelte Rollen; denn der Rollenmantel bietet keinen hinreichenden Schutz der Kraftmeßgeber vor der im Band gespeicherten Wärme bei warmgewalztem oder infolge einer Kaltverformung erwärmtem Band.

Der Erfindung liegt daher das Problem zugrunde, eine auch für eine Verwendung bei erhöhten Bandtemperaturen geeignete Meßrolle zu schaffen.

Zur Lösung dieses Problems münden erfindungsgemäß Kühlmittelkanäle im Bereich des Meßgebers, beispielsweise in einen, nach außen hin verschlossenen, den Meßgeber umgebenden Ringspalt oder in Ringnuten der Meßgeberabdeckung und/oder in der Wandung der Ausnehmungen.

Im einzelnen kann beispielsweise die Umfangsfläche des Meßgebers oder einer Meßgeberabdeckung mit einer Kunststoffschicht versehen sein, die den Spalt nach außen hin verschließt. Die Kunststoffschicht besitzt eine Dicke, die zunächst größer ist als die Differenz zwischen dem Durchmesser des Meßgebers bzw. einer Meßgeberabdeckung und dem Durchmesser der Ausnehmung, d.h. größer als der Spalt zwischen Meßgeber bzw. Abdeckung und Innenwandung.

Dementsprechend besitzt der ummantelte Meßgeber bzw. die ummantelte Meßgeberabdeckung gegenüber der Ausnehmung bei Raumtemperatur ein radiales Übermaß. Zum Einsetzen eines Meßgebers, beispielsweise mit einer beschichteten Meßgeberabdeckung größeren Durchmessers als der Meßgeber in die Ausnehmung der Meßrolle kann die Abdeckung unterkühlt und der Rollenkörper erwärmt werden. Dadurch verkleinert sich der Umfang der Abdeckung mit ihrer Beschichtung, während sich der Durchmesser der Ausnehmung infolge Wärmedehnung vergrößert. Unter diesen Umständen läßt sich die Abdeckung problemlos in die Ausnehmung einsetzen. Beim Angleichen beider Körper an die Raumtemperatur wird die Abdeckung selbsttätig eingespannt und zentriert, so daß ein gleichmäßiger, aber mit Kunststoff verschlossener Spalt zwischen der Abdeckung und der Ausnehmung entsteht.

Die Ringspalte einer Meßrolle lassen sich auf einfache Weise auch dadurch verschließen, daß die Rolle mit einer Ummantelung versehen ist. Diese Ummantelung verschließt nicht nur die Ringspalte zwischen den Meßgebern und der Wandung der Ausnehmungen, sondern besitzt darüber hinaus noch weitere Funktionen. So kann die Ummantelung - einzeln oder nebeneinander - aus verschleißfähigen Metallen wie Molybdän, Wolfram und Tantal, aus Karbiden wie Tantal-, Titan- und Wolframkarbid, Nitriden wie Hafnium-, Titan- und Zirkoniumnitriden, Boriden wie Tantal-, Titan- und Zirkoniumborid, Siliziden wie Tantal- oder Molybdänsilizid, aber auch aus Oxiden wie Al₂O₃, Cr₂O₃, HfO₂, TiO₂ und ZrO₂ bestehen. Diese verschleißfesten Werkstoffe lassen sich einzeln und teilweise auch nebeneinander, ebenso wie andere Werkstoffe, durch thermisches Spritzen auf ein die Rolle umgebendes dünnwandiges Mantelrohr aus Stahl als Träger für den verschleißfesten Werkstoff aufbringen.

Die Ummantelung kann aus einem die Meßrolle insgesamt umhüllenden Rohr oder auch aus mehreren nebeneinander angeordneten Rohrabschnitten bestehen. Das Rohr oder auch die Rohrabschnitte können aufgeschrumpft oder mechanisch mit dem Korpus der Meßrolle verbunden sein; sie können aus einem Werkstoff mit den gewünschten Eigenschaften bestehen oder mit einem solchen Werkstoff beschichtet sein.

In jedem Falle sollte die Ummantelung einschließlich eines etwaigen Trägerrohrs eine geringe Wanddicke besitzen, um einen etwaigen Kraftnebenschluß zwischen dem Korpus der Meßrolle und den Meßgebern auf dem Weg über die Ummantelung zu vermeiden, zumindest aber sehr gering zu halten. Mit zunehmender Wanddicke und geringer werdender Spaltbreite vergrößern sich nämlich - bei konstanter Radialkraft des Bandes - die im Wege eines Kraftnebenschlusses in den Meßgeber eingeleiteten Störkräfte. Je geringer daher die Dicke der Ummantelung und je breiter der die Meßgeber umgebende Spalt ist, desto geringer ist der Einfluß von Störkräften und desto größer ist auch die Durchbiegung der Ummantelung im Bereich der Ausnehmungen mit den Meßgebem. Die Spaltbreite sollte daher mindestens 0,5 mm betragen.

Bei einer sehr dünnen Ummantelung von beispielsweise 1 mm eignet sich eine Mantelrolle daher auch für eine Verwendung von Wegmeßgebern, sofern diese wie auch Kraftmeßgeber mit der Bohrungswandung nicht bzw. nicht in unmittelbarer Berührung stehen.

Besteht die Ummantelung aus mehreren Rohrabschnitten mit oder ohne Beschichtung, dann wirkt sich auch das günstig auf eine Minimierung der auf die Meßgeber einwirkenden Störkräfte (Kraftnebenschluß) aus, weil eine aus mehreren Rohrabschnitten bestehende Umhüllung ein im vorliegenden Zusammenhang günstigeres Biegeverhalten als die Rolle als solche zeigt; ihre Durchbiegung ist nicht so stark wie die der Rolle.

Die Erfindung wird im folgenden anhand von in der Zeichnung dargestellten Ausführungsbeispielen des näheren erläutert. In der Zeichnung zeigen:

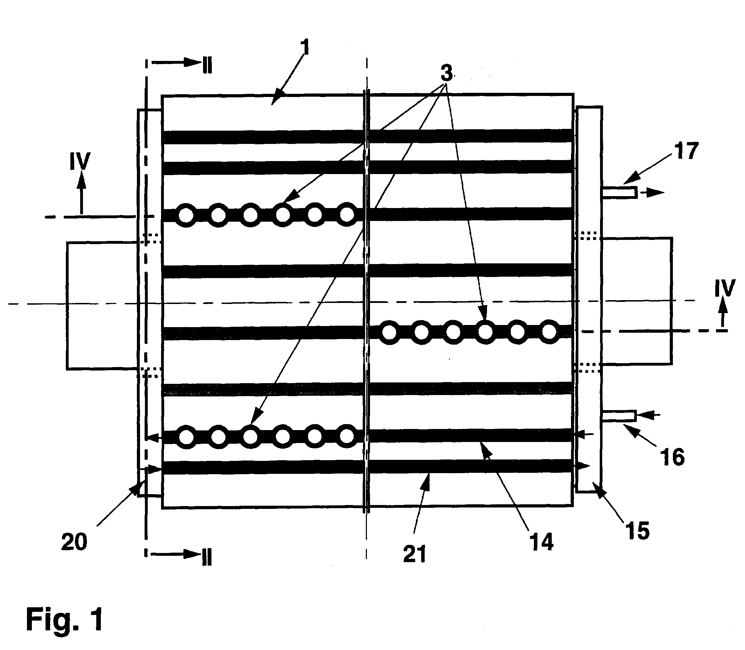

- Fig. 1: eine schematische Darstellung mit einer Draufsicht auf die erfindungsgemäße Meßrolle,
- Fig. 2: die obere Hälfte einer Stimansicht der Meßrolle nach der Linie II-II in Fig. 1,
- Fig. 3: die Teilansicht einer Meßrolle,
- Fig. 4: einen Schnitt nach der Linie IV-IV in Fig. 1,

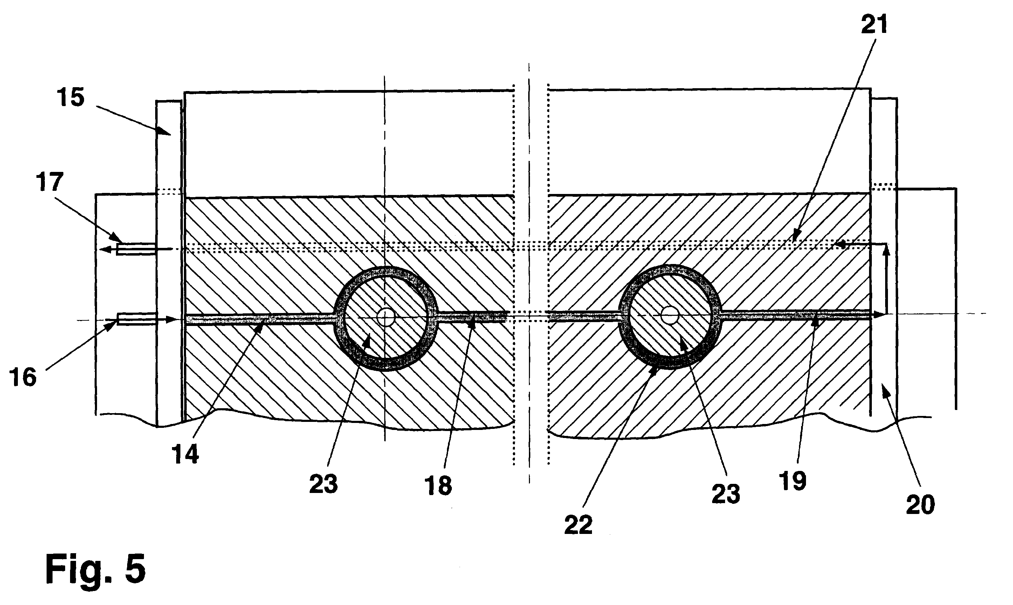

- Fig. 5: einen Längsschnitt durch die Meßrolle nach der Linie V-V in Fig. 3,
- Fig. 6: einen axialen Längsschnitt durch eine Meßrolle mit einer Ummantelung und
- Fig. 7: einen Meßgeber in vergrößerter Darstellung.

Die Meßrolle 1 besitzt eine Vielzahl von über die Rollenbreite verteilten Ausnehmungen 2, in die Meßgeber, beispielsweise Weg- oder Kraft- bzw. Piezomeßgeber 3 in Gestalt von Quarz-Unterlegscheiben zum Messen dynamischer und quasistatischer Kräfte mit zylindrischen Abdeckungen 4 eingesetzt sind. Die Meßgeber 3 erstrecken sich zwischen dem Boden 9 der Ausnehmung 2 und der Abdeckung 4. Die Abdeckung 4 besitzt eine Einsenkung 5, in der sich der Kopf 6 einer Spannschraube 7 befindet, die in eine Gewindebohrung 8 der Meßrolle 1 eingreift. Mit Hilfe der Spannschraube 7 ist die Abdeckung 4 mit dem Meßgeber 3 gegen den Boden 9 der Ausnehmung 2 verspannt.

Die Abdeckung 4 ist mit einer Kunststoffschicht 10 versehen. Zwischen dem Meßgeber 3 und der Wandung der Ausnehmung 2 der Rolle 1 befindet sich infolge der unterschiedlichen Durchmesser des Meßgebers und der Ausnehmung 2 ein Spalt 11, der bei eingesetzter Abdeckung durch die Kunststoffschicht 10 oder auf andere Weise nach außen hin verschlossen ist. Der Spalt kann sich auch zwischen der Meßgeberabdeckung und der Wandung der Ausnehmung befinden.

In der Meßrolle 1 befinden sich Bohrungen 12, die die Meßleitungen der Meßgeber 3 aufnehmen. Die Bohrungen sind zu einer Zentralbohrung 13 in der Rollenachse geführt, durch die die Meßleitungen aus der Meßrolle herausgeführt werden (nicht dargestellt).

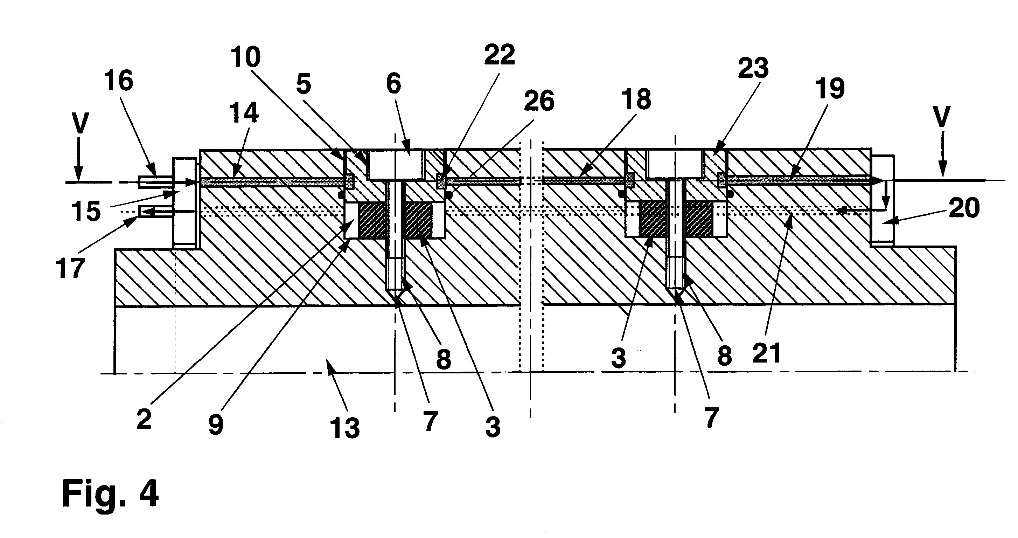

In den Ringspalt 11 mündet ein achsparalleler Kanal 14, über den von einem stirnseitigen Drehverteiler 15 mit Anschlüssen 16, 17 für die Kühlmittelzufuhr und -abführung das Kühlmittel, beispielsweise Wasser, in den Ringspalt 11 gelangt, das den Ringspalt auf der gegenüberliegenden Seite wieder verläßt und über Kanalabschnitte 18 dem nächsten Ringspalt 11 zugeführt wird; es strömt schließlich über einen weiteren Kanalabschnitt 19 (vgl. Fig. 4 in der an die Stelle des Spalts 11 eine Umfangsnut 22 getreten ist) zu einem Drehverteiler 20 auf der gegenüberliegenden Stirnseite der Meßrolle 1. Von dem Verteiler 20 gelangt das Kühlmittel über einen durchgehenden Kanal 21 zurück in den Verteiler 15. In gleicher Weise sind auch die anderen über den Umfang der Meßrolle verteilten Kühlmittelkanäle 14, 18, 19, 21 an die beiden Verteiler 15, 20 angeschlossen. Dabei wechseln sich über den Umfang der Meßrolle jeweils Kanalabschnitte 14, 18, 19 einerseits und durchgehende Kühlmittelkanäle 21 andererseits ab. Auf diese Weise ergibt sich eine Gegenstromkühlung der Meßrolle.

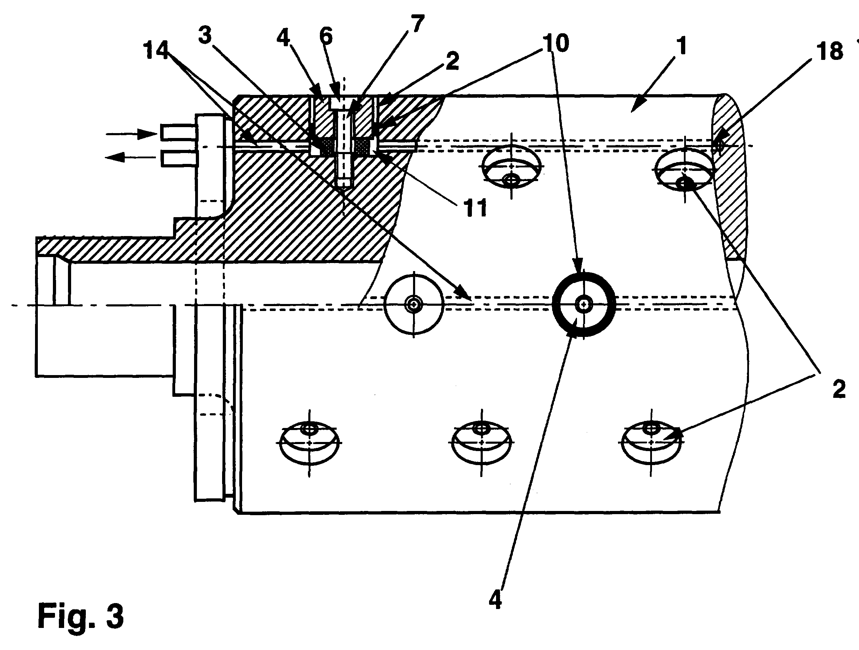

An die Stelle der mit einer Kunststoffschicht 10 verschlossenen Ringspalte der Meßrolle gemäß Fig. 3 können auch Umfangsnuten 22 in Abdeckungen 23 treten, die in gleicher Weise wie die Ringspalte 11 in einen Kühlmittelkreislauf 14, 15, 18, 19, 20, 21 eingebunden sind und über eine Wandungsnut 24 gemeinsam mit Kühlmittel versorgt werden.

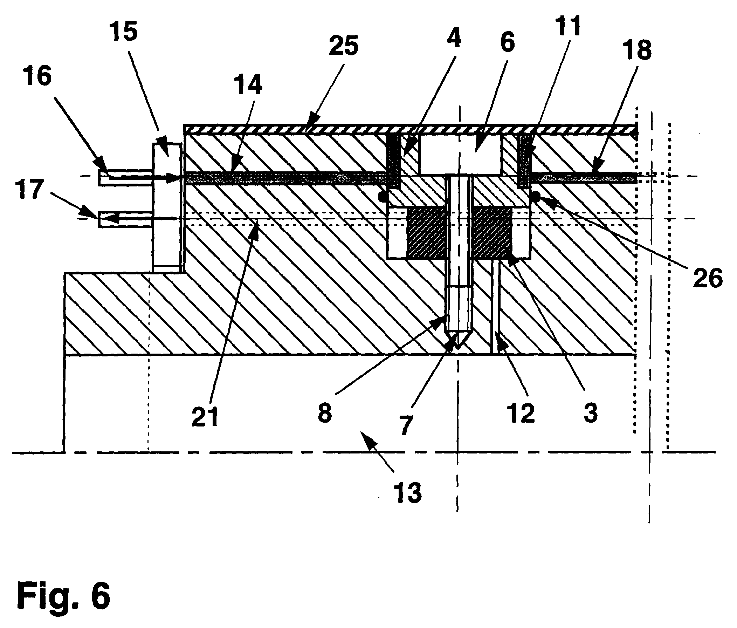

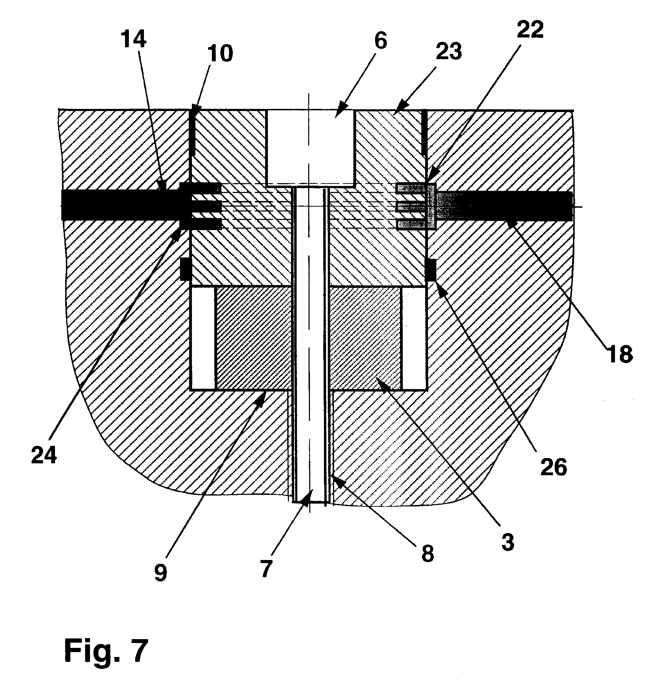

Schließlich können die Ringspalte 11 und die Umfangsnuten 22 aber auch mit Hilfe einer Ummantelung bzw. eines Mantelrohrs 25 nach außen hin und mit Hilfe eines O-Rings 26 nach innen abgedichtet sein (Fig. 6, 7).

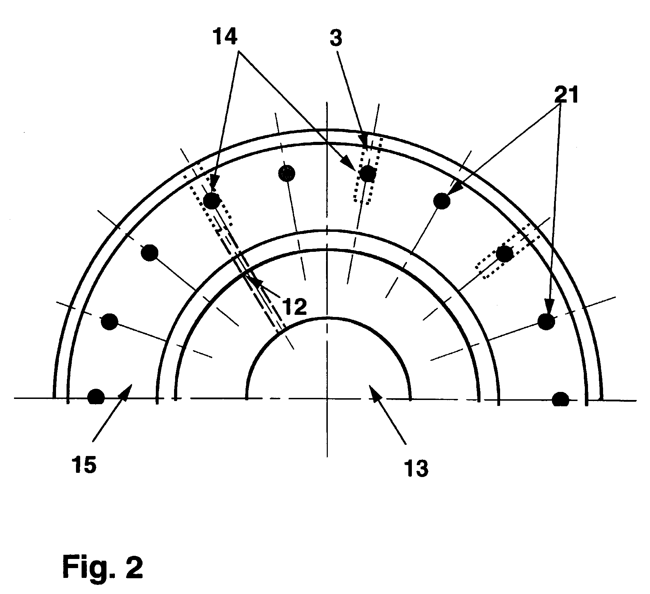

In allen Fällen ergibt sich eine wirksame Kühlung der Meßgeber bzw. der Meßrolle in ihrer Gesamtheit, die bei gleichmäßiger Verteilung der Kanalabschnitte bzw. Kanäle, wie sie in Fig. 2 dargestellt ist, Spannungen in der Meßrolle vermeidet.

## Patentansprüche

1. Meßrolle zum Feststellen von Planheitsabweichungen beim Walzen dünner Bänder, insbesondere beim Warmwalzen dünnen Stahlblechs, mit
- in Ausnehmungen (2) mit Abstand zur Wandung angeordneten Meßgebern (3) und
- im Bereich der Meßgeber mündenden Kühlmittelkanälen (14, 18, 19; 21).

2. Meßrolle nach Anspruch 1, **dadurch gekennzeichnet**, daß die Kühlmittelkanäle (14, 18, 19; 21) in einem nach außen hin verschlossenen Spalt (5) zwischen dem Meßgeber (3) oder einer Meßgeberabdeckung (4) und der Wandung münden.

3. Meßrolle nach Anspruch 2, **dadurch gekennzeichnet**, daß der Spalt (5) mit einer Kunststoffschicht (10) verschlossen ist.

4. Meßrolle nach einem der Ansprüche 1 bis 3, **dadurch gekennzeichnet**, daß die Kunststoffschicht (10) einen geringeren Elastizitätsmodul besitzt als die Meßrolle (1).

5. Meßrolle nach Anspruch 1, **dadurch gekennzeichnet,** daß die Kühlmittelkanäle in mindestens eine Umfangsnut (22) einer Meßgeberabdeckung (4) münden.

6. Meßrolle nach einem der Ansprüche 1 bis 5, **gekennzeichnet durch** eine geschlossene Ummantelung (26).

7. Meßrolle nach Anspruch 6, **dadurch gekennzeichnet,** daß die Dicke der Ummantelung (26) etwa 2 bis 5 mm beträgt.

8. Meßrolle nach Anspruch 6, **gekennzeichnet durch** eine auf ein Trägerrohr thermisch aufgespritzte Ummantelung.

9. Meßrolle nach einem der Ansprüche 6 bis 8, **gekennzeichnet durch** eine keramische Ummantelung.

10. Meßrolle nach einem der Ansprüche 1 bis 9, **gekennzeichnet durch** achsparallele Kühlkanäle (14, 18, 19; 21).

11. Meßrolle nach einem der Ansprüche 1 bis 10, **dadurch gekennzeichnet**, daß benachbarte Kühlkanäle (14, 18, 19; 21) miteinander verbunden sind.

12. Meßrolle nach Anspruch 11, **dadurch gekennzeichnet**, daß die Kühlkanäle (14, 18, 19; 21) über Drehverteiler (15, 20) miteinander verbunden sind.

13. Meßrolle nach einem der Ansprüche 1 bis 12, **dadurch gekennzeichnet**, daß die Kühlkanäle (14, 18, 19; 21) auf einem zur Rollenachse konzentrischen Kreis angeordnet sind.
